# EUROPEAN PATENT APPLICATION

(11) **EP 4 733 129 A1**
(43) Date of publication of application: **29.04.2026**
(21) Application number: 25189288.1
(22) Date of filing: 14.07.2025
(51) Int. Cl.: B60L 53/80, B60L 58/12, H02J 7/00, H01M 10/48, H02J 7/50

(54) **BATTERY SELECTION METHODS FOR BATTERY EXCHANGE AND BATTERY ENERGY STATIONS THEREOF**

(30) Priority: 25.10.2024 TW 113140810
(71) Applicant: Kwang Yang Motor Co., Ltd., Kaohsiung City 807682 (TW)
(72) Inventor: LIU, YU-RUI, 115 Taipei City (TW); CHEN, WEI-FAN, 115 Taipei City (TW)
(74) Representative: Karakatsanis, Georgios

(57) **Abstract**

Battery selection methods for battery exchange are provided. Batteries (112) in a battery energy station (100) are sorted in response to a battery exchange request according to SOC of each battery (112) to form candidate batteries (112). A plurality of first candidate batteries (112) having the second highest SOC are selected and provided. If the first candidate batteries (112) do not exist, a second candidate battery (112) with the highest SOC and a third candidate battery (112) with the second highest SOC are selected and provided when the difference in SOC therebetween is less than or equal to a first predetermined threshold value. When the difference in SOC is not less than or equal to the first predetermined threshold value, the second candidate battery (112) is excluded from the candidate batteries (112), and the first selection operation is re-performed.

## Description

### BACKGROUND OF THE INVENTION

### Field of the Invention

The disclosure relates generally relates to battery selection methods for battery exchange and the battery energy stations thereof, and, more particularly to methods and the battery energy stations thereof that can select and exchange batteries based on the number of battery required, the state-of-charge (SOC) of the batteries to be exchanged and the SOC of the current batteries in the battery energy station.

### Description of the Related Art

In recent years, with the rise of environmental awareness and the advancement of electric vehicle technology, the development of electric vehicles powered by electricity to replace traditional vehicles powered by fossil fuels has gradually become an important goal in the automotive field, making electric vehicles more and more popular. In order to increase the range and willingness of electric vehicles, many countries or cities have begun to plan to set up charging stations and battery energy stations in public places to provide electric vehicles and/or electric motorcycles for charging or battery replacement, making the use of electric vehicles more convenient.

For different electric vehicles, the charging or battery requirements during peak hours and off-peak hours may be different. For example, the battery requirements of electric motorcycles during peak hours will be higher than during off-peak hours. During peak hours, the battery energy station needs to charge the battery at a high speed to fully charge the battery as soon as possible. However, during off-peak hours, since the battery demand is not high, the battery energy station can charge the battery slowly to meet the specific battery demand while saving costs. In addition, different electric vehicles may also have different requirements for the number of batteries.

On the other hand, since it takes time to charge the battery, electric scooter users usually use battery exchange to replenish their energy during busy commuting hours. Generally speaking, batteries are one of the most important costs for the industry, and rechargeable batteries have a limited life cycle. Therefore, how to properly charge and swap the batteries in the battery energy station has become an urgent problem for the industry.

### BRIEF SUMMARY OF THE INVENTION

Therefore, the object of the present invention is to provide battery selection methods for battery exchange and the battery energy stations thereof.

In an embodiment of a battery selection method for battery exchange suitable for a battery energy station (100) used for storing and charging a plurality of batteries, a battery exchange request is received. The state of charge (SOC) of each battery (112) in the battery energy station (100) is obtained, and the batteries (112) are sorted according to the SOC of each battery (112) to become a plurality of candidate batteries (112). In response to the battery exchange request, a first selection operation is performed. In the first selection operation, it is determined whether a plurality of first candidate batteries (112) having the second highest SOC exist, wherein the SOC of each of the first candidate batteries (112) is the same. When a plurality of first candidate batteries (112) having the second highest SOC exist, the first candidate batteries (112) are selected as a candidate battery group, and the candidate battery group is provided in response to the battery exchange request. When the first candidate batteries (112) do not exist, it is determined whether the difference in SOC between a second candidate battery (112) with the highest SOC and a third candidate battery (112) with the second highest SOC is less than or equal to a first predetermined threshold value or ratio. When the difference in SOC between the second candidate battery (112) with the highest SOC and the third candidate battery (112) with the second highest SOC is less than or equal to the first predetermined threshold value or ratio, the second candidate battery (112) and the third candidate battery (112) are selected as a candidate battery group, and the candidate battery group is provided in response to the battery exchange request. When the difference in SOC between the second candidate battery (112) and the third candidate battery (112) is not less than or equal to the first predetermined threshold value or ratio, the second candidate battery (112) is excluded from the candidate batteries (112), and the first selection operation re-performed.

An embodiment of a battery energy station (100) comprises a battery storage system (110) with a plurality of batteries (112), an energy module (120) for charging the batteries (112), and a processing unit (140). The processing unit (140) coupled to the battery storage system (110) and the energy module (120). The processing unit (140) receives a battery exchange request, obtains the state of charge (SOC) of each battery (112), and sorts the batteries (112) according to the SOC of each battery (112) to become a plurality of candidate batteries (112). In response to the battery exchange request, the processing unit (140) performs a first selection operation. In the first selection operation, the processing unit (140) determines whether a plurality of first candidate batteries (112) having the second highest SOC exist, wherein the SOC of each of the first candidate batteries (112) is the same, when a plurality of first candidate batteries (112) having the second highest SOC exist, selects the first candidate batteries (112) as a candidate battery group, and provides the candidate battery group in response to the battery exchange request. When the first candidate batteries (112) do not exist, the processing unit (140) determines whether the difference in SOC between a second candidate battery (112) with the highest SOC and a third candidate battery (112) with the second highest SOC is less than or equal to a first predetermined threshold value or ratio, and when the difference in SOC between the second candidate battery (112) with the highest SOC and the third candidate battery (112) with the second highest SOC is less than or equal to the first predetermined threshold value or ratio, the processing unit (140) selects the second candidate battery (112) and the third candidate battery (112) as a candidate battery group, and provides the candidate battery group in response to the battery exchange request. When the difference in SOC between the second candidate battery (112) and the third candidate battery (112) is not less than or equal to the first predetermined threshold value or ratio, the processing unit (140) excludes the second candidate battery (112) from the candidate batteries (112), and re-performs the first selection operation.

In some embodiments, the processing unit (140) further obtains a battery quantity requirement according to the battery exchange request, performs the first selection operation when the battery quantity requirement is 2, and performs a second selection operation when the battery quantity requirement is 1, wherein in the second selection operation, a fourth candidate battery (112) with the highest SOC is selected from the candidate batteries (112) and the fourth candidate battery (112) is provided in response to the battery exchange request.

In some embodiments, the processing unit (140) further determines whether the SOC of each of the batteries (112) is higher than a second predetermined threshold value or ratio, and excludes the battery (112) from the first selection operation when the SOC of the battery (112) is not higher than the second predetermined threshold value or ratio.

In some embodiments, the battery energy station (100) further comprises a battery slot for receiving a specific battery to generate the battery exchange request, and the processing unit (140) further reads the specific battery to obtain the SOC of the specific battery, determines whether the SOC of each of the battery (112) is higher than a predetermined value or ratio of the SOC of the specific battery, and excludes the battery (112) from the first selection operation when the SOC of the battery (112) is not higher than the predetermined value or ratio of the SOC of the specific battery.

In some embodiments, the battery energy station (100) further comprises at least two specific battery slots, and the processing unit (140) further provides the candidate battery group through the at least two specific battery slots in response to the battery exchange request, determines whether at least one of the specific battery slots has an abnormal state when providing the candidate battery group, and when at least one of the specific battery slots has the abnormal state when providing the candidate battery group, excludes the candidate battery (112) located in the specific battery slot where the abnormal state occurs, re-performs the first selection operation, and cancels the determination corresponding to the first predetermined threshold value or ratio in the first selection operation.

Battery selection methods for battery exchange may take the form of a program code embodied in a tangible media. When the program code is loaded into and executed by a machine, the machine becomes an apparatus for practicing the disclosed method.

### BRIEF DESCRIPTION OF THE DRAWINGS

The invention will become more fully understood by referring to the following detailed description with reference to the accompanying drawings, wherein:
Fig. 1 is a schematic diagram illustrating an embodiment of a battery energy station of the invention;
Fig. 2 is a schematic diagram illustrating another embodiment of a battery energy station connecting to a remote server via a network of the invention;
Fig. 3 is a flowchart of an embodiment of a battery selection method for battery exchange of the invention;
Fig. 4 is a flowchart of an embodiment of a first selection operation of the invention;
Fig. 5 is a flowchart of another embodiment of a battery selection method for battery exchange of the invention;
Fig. 6 is a flowchart of an embodiment of a second selection operation of the invention;
Fig. 7 is a flowchart of another embodiment of a battery selection method for battery exchange of the invention; and
Fig. 8 is a flowchart of another embodiment of a battery selection method for battery exchange of the invention.

### DETAILED DESCRIPTION OF THE INVENTION

The following description is of the best-contemplated mode of carrying out the invention. This description is made for the purpose of illustrating the general principles of the invention and should not be taken in a limiting sense. It should be understood that the embodiments may be realized in software, hardware, firmware, or any combination thereof.

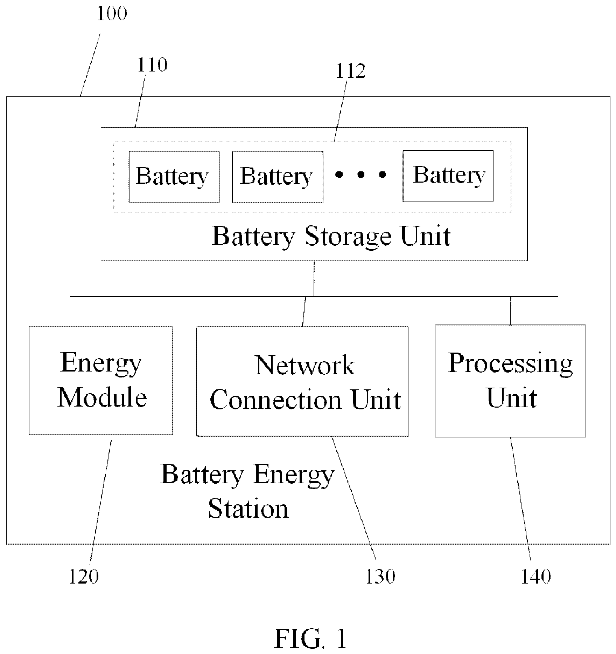

Fig. 1 is a schematic diagram illustrating an embodiment of a battery energy station of the invention. The battery energy station 100 according to the embodiment of the present invention can be applied to an electronic device. As shown in the Fig. 1, the battery energy station 100 at least comprises a battery storage system 110, an energy module 120, a network connection unit 130, and a processing unit 140. The battery storage system 110 has a specific mechanism (not shown in the figure) that can store a plurality of batteries 112 and selectively lock or release the batteries 112. It is noted that, the battery storage system 110 can have a plurality of battery slots to store the batteries 112. The battery energy station 100 can provide the batteries 112 to at least one power-consuming device, such as an electric motorcycle or an electric vehicle. The energy module 120 can be electrically coupled to a power grid (not shown in the figure) to obtain a total current to supply electricity to the battery energy station 100, and charge the batteries 112 according to the signal of the processing unit 140. It is understood that, the battery storage system 110 may include a charging module corresponding to each battery 112, and the charging module has an upper current limit and/or a lower current limit to charge the corresponding battery. It is noted that, in some embodiments, the energy module 120 can actively detect the total current supplied by the power grid to the battery energy station 100, and notify the processing unit 140 of the corresponding total current information. The network connection unit 130 can be connected to a network, so that the battery energy station 100 has a network connection capability. In some embodiments, the network can be a wired network, a telecommunications network, and a wireless network, such as a Wi-Fi network. The processing unit 140 can control the operation of all hardware and software in the battery energy station 100, and execute the battery selection methods for battery exchange of the present invention, the details of which will be described later.

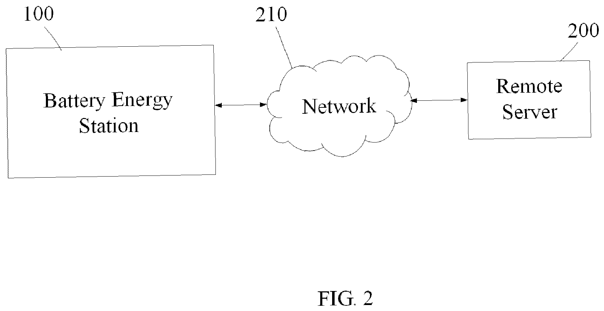

Fig. 2 is a schematic diagram illustrating another embodiment of a battery energy station connecting to a remote server via a network of the invention. Similarly, the battery energy station 100 according to the embodiment of the present invention can be applied to an electronic device, which has a plurality of batteries that can be provided to at least one power-consuming device, such as an electric motorcycle or an electric vehicle. The battery energy station 100 can have components similar to those in FIG. 1, which will not be described in detail here. The battery energy station 100 can be connected to a remote server 200 through a network 210, such as a wired network, a telecommunication network, and a wireless network, such as a Wi-Fi network, using a network connection unit 130. It is noted that in some embodiments, the remote server 200 can simultaneously manage other battery energy stations located at the same location or at different locations. As mentioned above, the energy module 120 of the battery energy station 100 can actively detect the total current supplied by the power grid to the battery energy station 100, and notify the processing unit 140 of the corresponding total current information. In some embodiments, the remote server 200 can also notify the battery energy station 100 of the corresponding total current information through the network 210. In some embodiments, the remote server 200 may also transmit relevant information of different time periods, such as peak hours and off-peak hours, to the battery energy station 100 via the network 210. In some embodiments, the remote server 200 may also transmit relevant user information to the battery energy station 100 via the network 210. The battery energy station 100 may perform relevant operations based on the received information.

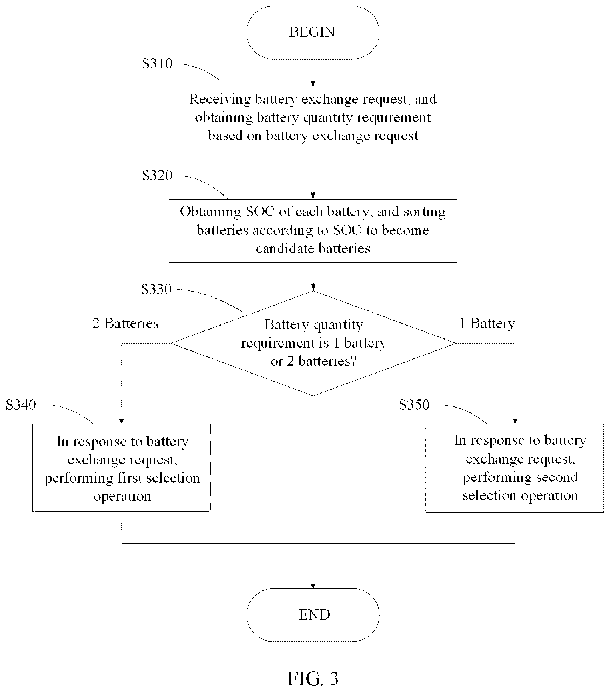

Fig. 3 is a flowchart of an embodiment of a battery selection method for battery exchange of the invention. The battery selection method for battery exchange according to the embodiment of the present invention is applicable to an electronic device for storing and charging a plurality of batteries, such as the battery energy station in Fig. 1.

First, in step S310, a battery exchange request is received, and a battery quantity requirement is obtained according to the battery exchange request. It is worth noting that in some embodiments, the battery storage system of the battery energy station may have at least one battery slot to receive a specific battery placed by the user to generate this battery exchange request. In some embodiments, the battery exchange request may include a model of the corresponding electric vehicle and/or the number of batteries required (battery quantity requirement) by the corresponding model. Then, as in step S320, the SOC of each battery in the corresponding battery energy station is obtained, and the batteries are sorted according to the SOC of each battery to form a plurality of candidate batteries. It is reminded that the battery energy station can charge the batteries inside it. In some embodiments, the SOC of the corresponding battery can be obtained by a battery management system (BMS) in the battery. It is noted that, in some embodiments, the SOC can represent a battery power level of the corresponding battery. Then, as in step S330, it is determined whether the battery quantity requirement is 1 battery or 2 batteries. When the battery quantity requirement is 2 (batteries), in step S340, the first selection operation is performed. When the battery quantity requirement is 1 (battery), in step S350, a second selection operation is performed. It is noted that, the first selection operation and the second selection operation will be described separately below.

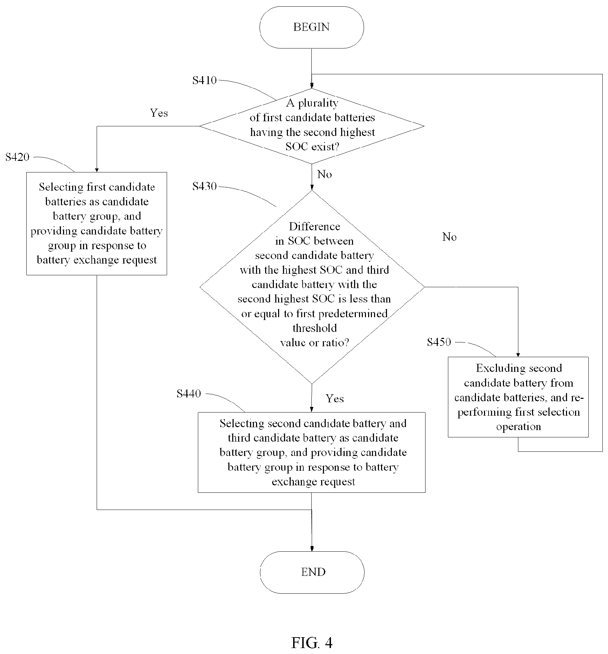

Fig. 4 is a flowchart of an embodiment of a first selection operation according to the present invention. The first selection operation according to an embodiment of the present invention is applicable to an electronic device for storing and charging a plurality of batteries, such as the battery energy station of Fig. 1. It is noted that, the batteries in the battery energy station are sorted according to their SOC to form a plurality of candidate batteries.

First, in step S410, it is determined whether there are a plurality of first candidate batteries with a second highest SOC among the candidate batteries, wherein the SOC of each corresponding first candidate battery is the same. It is noted that in some embodiments, the number of the first candidate batteries may be 2, in other words, there are 2 first candidate batteries with a second highest SOC among the candidate batteries. When the first candidate batteries exist (Yes in step S410), in step S420, the first candidate batteries are selected as a candidate battery group, and the candidate battery group is provided in response to the battery exchange request. When the first candidate batteries do not exist (No in step S410), in step S430, it is determined whether the difference between the SOC of a second candidate battery among the candidate batteries and the SOC of a third candidate battery among the candidate batteries is less than or equal to a first predetermined threshold value or ratio, wherein the second candidate battery has the highest SOC among the candidate batteries and the third candidate battery has the second highest SOC among the candidate batteries. In some embodiments, the first predetermined threshold value or ratio may be 20%. In one example, it is determined whether the difference in SOC between the second candidate battery with the highest SOC and the third candidate battery with the second highest SOC among the candidate batteries is less than or equal to 20%. When the difference in SOC of the second candidate battery and the SOC of the third candidate battery is less than or equal to the first predetermined threshold value or ratio (Yes in step S430), in step S440, the second candidate battery and the third candidate battery are selected as a candidate battery group, and the candidate battery group is provided in response to the battery exchange request. When the difference in SOC of the second candidate battery and the SOC of the third candidate battery is not less than or equal to the first predetermined threshold value or ratio (No in step S430), in step S450, the second candidate battery is excluded from the candidate batteries, and the process returns to step S410 to re-perfrom the first selection operation for the candidate batteries after excluding the second candidate battery.

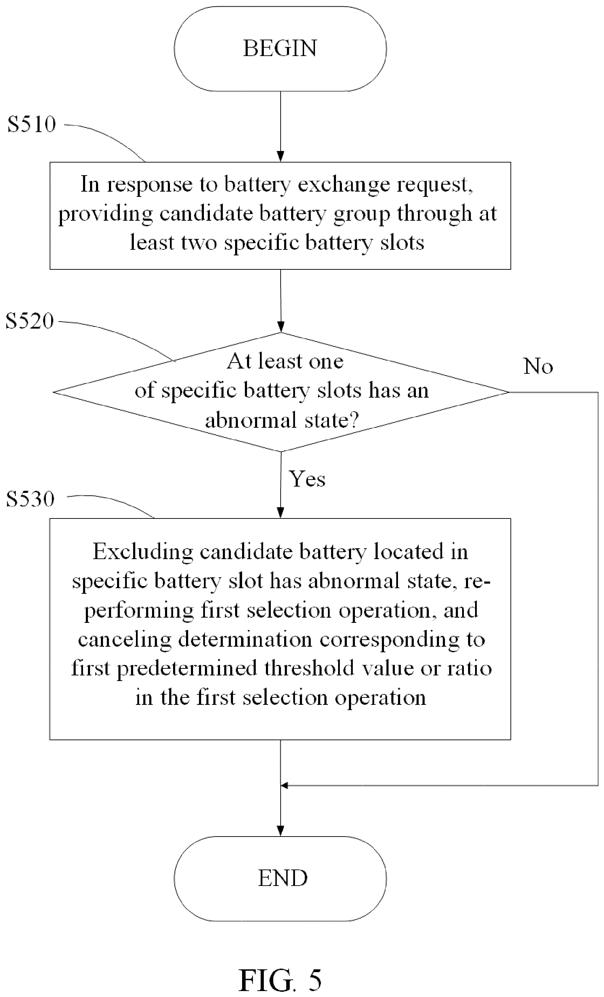

Fig. 5 is a flowchart of another embodiment of a battery selection method for battery exchange of the invention. In the embodiment, the battery slot status of the selected battery is monitored so that subsequent management operations can be performed when an abnormal state occurs. It is worth noting that an abnormal state indicates that the battery slot is out of control or cannot provide battery.

First, in step S510, in response to the battery exchange request, a candidate battery group including the selected batteries is provided through at least two specific battery slots. In step S520, it is determined whether at least one of the specific battery slots has an abnormal state when providing the candidate battery group. When the specific battery slots do not have an abnormal state when providing the candidate battery group (No in step S520), the process ends. When at least one of the specific battery slots has an abnormal state when providing the candidate battery group (Yes in step S520), in step S530, the candidate battery located in the specific battery slot where the abnormal state has occurred is excluded, and the first selection operation is re-performed, and the determination of the corresponding first predetermined threshold value or ratio is canceled in the first selection operation.

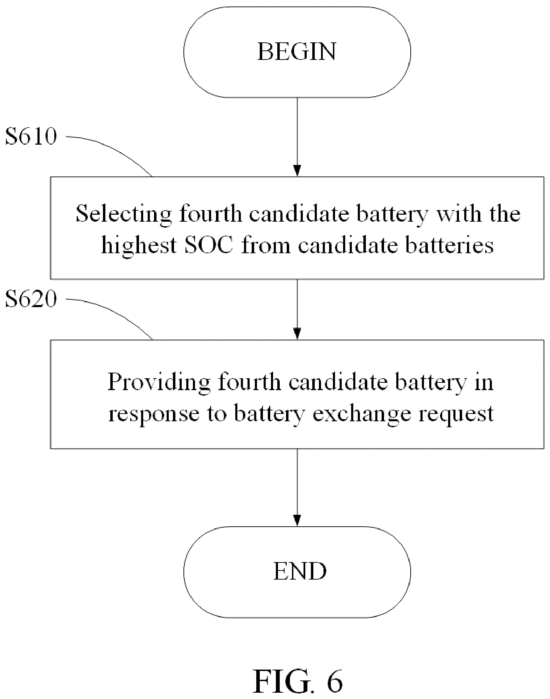

Fig. 6 is a flowchart of an embodiment of a second selection operation according to the present invention. The second selection operation according to an embodiment of the present invention is applicable to an electronic device for storing and charging a plurality of batteries, such as the battery energy station of Fig. 1. It is noted that, the batteries in the battery energy station are sorted according to their SOC to form a plurality of candidate batteries. First, in step S610, a fourth candidate battery having a highest SOC is selected from the candidate batteries, and in step S620, the fourth candidate battery is provided in response to the battery exchange request.

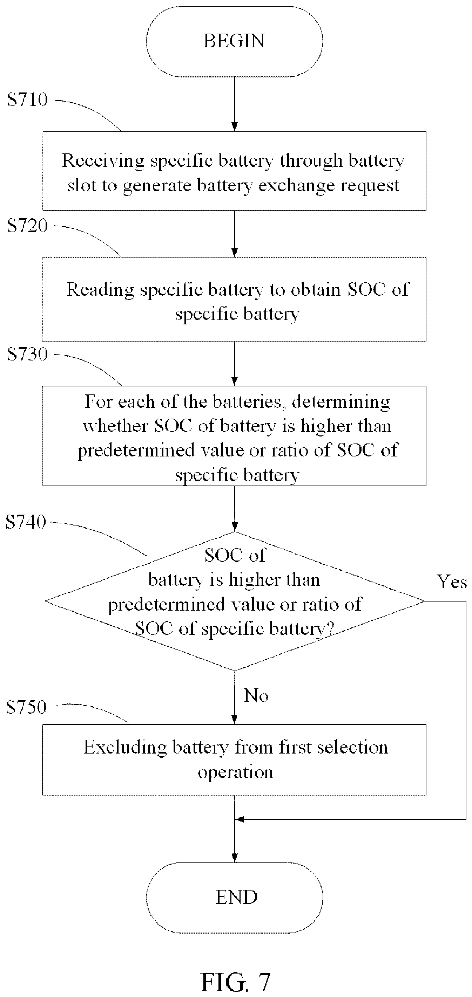

Fig. 7 is a flowchart of another embodiment of a battery selection method for battery exchange of the invention. The battery selection method for battery exchange according to an embodiment of the present invention is applicable to an electronic device for storing and charging a plurality of batteries, such as the battery energy station of Fig. 1. In the embodiment, the SOC of the candidate battery must be greater than the SOC of the user's specific battery.

First, in step S710, a specific battery is received through a battery slot of a battery energy station to generate a battery exchange request. In step S720, the specific battery is read to obtain the SOC of the specific battery. Then, in step S730, for each battery, it is determined whether the SOC of the corresponding battery is higher than a predetermined value or ratio of the SOC of the specific battery, such as 20% of the SOC of the specific battery. It is noted that the aforementioned predetermined value or predetermined ratio is only an example of this case, and the present invention is not limited thereto. When the SOC of the corresponding battery is higher than the predetermined value or ratio of the SOC of the specific battery (Yes in step S740), the process ends. In other words, when the SOC of the corresponding battery is higher than the predetermined value or ratio of the SOC of the specific battery, the battery is selected as a candidate battery. When the SOC of the corresponding battery is not higher than the predetermined value or predetermined ratio of the SOC of the specific battery (No in step S740), in step S750, the battery is excluded from the first selection operation.

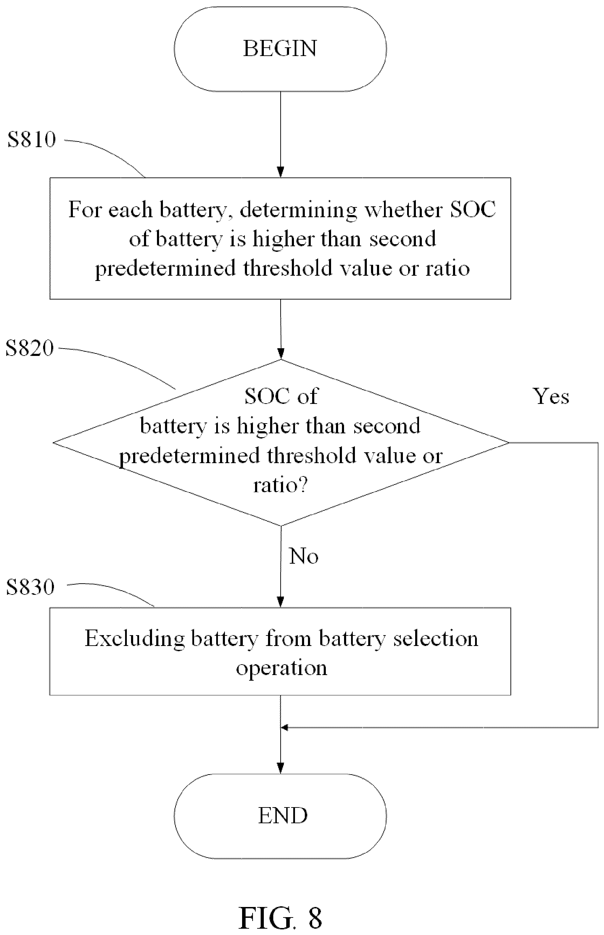

Fig. 8 is a flowchart of another embodiment of a battery selection method for battery exchange of the invention. The battery selection method for battery exchange according to an embodiment of the present invention is applicable to an electronic device for storing and charging a plurality of batteries, such as the battery energy station of Fig. 1. In the embodiment, the batteries can be filtered in advance according to the SOC of the batteries before the selection operation.

First, in step S810, for each battery, it is determined whether the SOC of the corresponding battery is higher than a second predetermined threshold value or ratio. It is noted that the second predetermined threshold value and ratio can be set according to different applications and requirements. For example, the second predetermined threshold ratio can be 60% of the maximum full charge level of the battery. It is reminded that the aforementioned predetermined threshold ratio is only an example of this case, and the present invention is not limited to this. When the SOC of the corresponding battery is higher than the second predetermined threshold value or ratio (Yes in step S820), the process ends. In other words, when the SOC of the corresponding battery is higher than the second predetermined threshold value or ratio, this battery is selected as a candidate battery. When the SOC of the corresponding battery is not higher than the second predetermined threshold value or ratio (No in step S820), in step S830, the battery is excluded from the battery selection operation.

Therefore, the battery selection methods for battery exchange and the battery energy stations thereof can select batteries for exchange based on the battery quantity requirements, the SOC of the battery to be exchanged, and the SOC of the current batteries in the battery energy station, thereby increasing user convenience while meeting battery exchange requirements.

Battery selection methods for battery exchange, may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for executing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for executing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalent.

## Claims

1. A battery selection method for battery exchange, **characterized in that** the battery selection method is suitable for a battery energy station (100) used for storing and charging a plurality of batteries (112), and comprises:
receiving a battery exchange request;
obtaining the state of charge (SOC) of each battery (112) in the battery energy station (100);
sorting the batteries (112) according to the SOC of each battery (112) to form a plurality of candidate batteries (112);
in response to the battery exchange request, performing a first selection operation, wherein the first selection operation comprises:
determining whether a plurality of first candidate batteries (112) having the second highest SOC exist, wherein the SOC of each of the first candidate batteries (112) is the same;
when a plurality of first candidate batteries (112) having the second highest SOC exist, selecting the first candidate batteries (112) as a candidate battery group, and providing the candidate battery group in response to the battery exchange request;
when the first candidate batteries (112) do not exist, determining whether the difference in SOC between a second candidate battery (112) with the highest SOC and a third candidate battery (112) with the second highest SOC is less than or equal to a first predetermined threshold value or ratio;
when the difference in SOC between the second candidate battery (112) with the highest SOC and the third candidate battery (112) with the second highest SOC is less than or equal to the first predetermined threshold value or ratio, selecting the second candidate battery (112) and the third candidate battery (112) as a candidate battery group, and providing the candidate battery group in response to the battery exchange request; and
when the difference in SOC between the second candidate battery (112) and the third candidate battery (112) is not less than or equal to the first predetermined threshold value or ratio, excluding the second candidate battery (112) from the candidate batteries (112), and re-performing the first selection operation.

2. The method of claim 1, further comprising:
obtaining a battery quantity requirement according to the battery exchange request;
when the battery quantity requirement is 2, performing the first selection operation; and
when the battery quantity requirement is 1, performing a second selection operation, wherein the second selection operation comprises:
selecting a fourth candidate battery (112) with the highest SOC from the candidate batteries (112); and
providing the fourth candidate battery (112) in response to the battery exchange request.

3. The method of claim 1, further comprising:
for each of the batteries (112), determining whether the SOC of the battery (112) is higher than a second predetermined threshold value or ratio; and
when the SOC of the battery (112) is not higher than the second predetermined threshold value or ratio, excluding the battery (112) from the first selection operation.

4. The method of claim 1, further comprising:
receiving a specific battery through a battery slot of the battery energy station (100) to generate the battery exchange request;
reading the specific battery to obtain the SOC of the specific battery;
for each of the batteries (112), determining whether the SOC of the battery (112) is higher than a predetermined value or ratio of the SOC of the specific battery; and
when the SOC of the battery (112) is not higher than the predetermined value or ratio of the SOC of the specific battery, excluding the battery (112) from the first selection operation.

5. The method of claim 1, further comprises:
in response to the battery exchange request, providing the candidate battery group through at least two specific battery slots of the battery energy station (100);
determining whether at least one of the specific battery slots has an abnormal state when providing the candidate battery group; and
when at least one of the specific battery slots has the abnormal state when providing the candidate battery group, excluding the candidate battery (112) located in the specific battery slot where the abnormal state occurs, re-performing the first selection operation, and canceling the determination corresponding to the first predetermined threshold value or ratio in the first selection operation.

6. A battery energy station (100) **characterized in** comprising:
a battery storage system (110) comprising a plurality of batteries (112);
an energy module (120) charging the batteries (112); and
a processing unit (140) coupled to the battery storage system (110) and the energy module (120), for receiving a battery exchange request, obtaining the state of charge (SOC) of each battery (112), sorting the batteries (112) according to the SOC of each battery (112) to become a plurality of candidate batteries (112), in response to the battery exchange request, performing a first selection operation, in the first selection operation, determining whether a plurality of first candidate batteries (112) having the second highest SOC exist, wherein the SOC of each of the first candidate batteries (112) is the same, when a plurality of first candidate batteries (112) having the second highest SOC exist, selecting the first candidate batteries (112) as a candidate battery group, and providing the candidate battery group in response to the battery exchange request, when the first candidate batteries (112) do not exist, determining whether the difference in SOC between a second candidate battery (112) with the highest SOC and a third candidate battery (112) with the second highest SOC is less than or equal to a first predetermined threshold value or ratio, when the difference in SOC between the second candidate battery (112) with the highest SOC and the third candidate battery (112) with the second highest SOC is less than or equal to the first predetermined threshold value or ratio, selecting the second candidate battery (112) and the third candidate battery (112) as a candidate battery group, and providing the candidate battery group in response to the battery exchange request; and when the difference in SOC between the second candidate battery (112) and the third candidate battery (112) is not less than or equal to the first predetermined threshold value or ratio, excluding the second candidate battery (112) from the candidate batteries (112), and re-performing the first selection operation.

7. The battery energy station (100) of claim 6, wherein the processing unit (140) further obtains a battery quantity requirement according to the battery exchange request, performs the first selection operation when the battery quantity requirement is 2, and performs a second selection operation when the battery quantity requirement is 1, wherein in the second selection operation, a fourth candidate battery (112) with the highest SOC is selected from the candidate batteries (112) and the fourth candidate battery (112) is provided in response to the battery exchange request.

8. The battery energy station (100) of claim 6, wherein the processing unit (140) further determines whether the SOC of each of the batteries (112) is higher than a second predetermined threshold value or ratio, and excludes the battery (112) from the first selection operation when the SOC of the battery (112) is not higher than the second predetermined threshold value or ratio.

9. The battery energy station (100) of claim 6, further comprising a battery slot receiving a specific battery to generate the battery exchange request, and the processing unit (140) further reads the specific battery to obtain the SOC of the specific battery, determines whether the SOC of each of the battery (112) is higher than a predetermined value or ratio of the SOC of the specific battery, and excludes the battery (112) from the first selection operation when the SOC of the battery (112) is not higher than the predetermined value or ratio of the SOC of the specific battery.

10. The battery energy station (100) of claim 6, further comprising at least two specific battery slots, and the processing unit (140) further provides the candidate battery group through the at least two specific battery slots in response to the battery exchange request, determines whether at least one of the specific battery slots has an abnormal state when providing the candidate battery group, and when at least one of the specific battery slots has the abnormal state when providing the candidate battery group, excludes the candidate battery (112) located in the specific battery slot where the abnormal state occurs, re-performs the first selection operation, and cancels the determination corresponding to the first predetermined threshold value or ratio in the first selection operation.
